(19) **Europäisches Patentamt**

**European Patent Office**

**Office européen des brevets**

(11) **EP 0 998 130 B1**

(12) **EUROPEAN PATENT SPECIFICATION**

(45) Date of publication and mention
of the grant of the patent:
**27.12.2006 Bulletin 2006/52**

(51) Int Cl.:
*H04N 1/58* (2006.01)  *H04N 1/64* (2006.01)

(21) Application number: **99119089.3**

(22) Date of filing: **01.10.1999**

(54) **Digital camera and image processing method**

Digitale Kamera und Bildverarbeitungsverfahren

Caméra numérique et procédé de traitement d'image

(84) Designated Contracting States:
**AT BE CH CY DE DK ES FI FR GB GR IE IT LI LU MC NL PT SE**

(30) Priority: **01.10.1998  JP  28020798**
**14.01.1999  JP  762299**
**03.08.1999  JP  21985999**

(43) Date of publication of application:
**03.05.2000  Bulletin 2000/18**

(73) Proprietor: **SEIKO EPSON CORPORATION**
**Shinjuku-ku,**
**Tokyo 163-0811 (JP)**

(72) Inventor: **Shiohara, Ryuichi**
**Suwa-shi,**
**Nagano 392-8502 (JP)**

(74) Representative: **HOFFMANN EITLE**
**Patent- und Rechtsanwälte**
**Arabellastrasse 4**
**81925 München (DE)**

(56) References cited:
**EP-A- 0 584 966**    **US-A- 5 442 718**
**US-A- 5 528 292**    **US-A- 5 594 499**

**EP 0 998 130 B1**

**Description**

BACKGROUND OF THE INVENTION

1. Field of the Invention

The present invention relates to a digital camera capable of recording light reflected from an object of photography by converting the light into a digital signal and compressing the digital signal, as well as to a method of processing digital image data by compressing the data.

The present application is based on Japanese Patent Applications No. Hei. 10-280207, 11-7622 and 11-219859.

2. Description of the Related Art

US-A-5 442 718 describes an apparatus for processing image data. Analog image data signals are converted into digital image data signals and are then reversibly compressed at a predetermined compression rate and stored in a recording medium by a storage means. In reproducing the image data, the recorded image data is read from the recording medium and expanded at predetermined expansion rate to generate data substantially the same as the image data signals before compression. The expanded data is interpolated in a predetermined interpolation manner.

EP-A-0 868 078 describes a digital video camera comprising an electronic zoom circuit. An object image formed on the image pickup surface of a CCD by an image pickup lens is photoelectrically converted by the CCD into electrical signals. An A/D converter converts the electrical signals into a digital image pickup signal. The digital image pickup signal is subjected to signal processing, like filtering, color separation, gamma correction, clipping, and the like. The processed signal is then input to an electronic zoom circuit, and is subjected to enlargement or reduction processing. The zoomed image signal which represent a part of the digital image pickup signal is then subjected to data compression.

US 5,594,499 relates to an image pickup apparatus which can be applied to an image transmission system such as a television conference system, a video-telephone system or the like in which a codec is used. Analog to digital conversion and the CIF-format conversion are performed by the video camera whose pixel number is an integral multiple or its reciprocal of that of the CIF. Therefore, it is not necessary to employ a line interpolation circuit using a large-sized memory, so that the circuit arrangement can be simplified.

In order to handle high-quality image data, an image processing apparatus, which uses a computer, requires large-capacity memory or a recording medium. For reserving and transferring image data, compression of image data with a minimum of deterioration in image quality is desirable.

A digital camera-which converts light into an electric signal by means of image pick-up means, such as a charge-coupled device, converts the electric signal into digital data, and records the digital data into a recording medium such as flash memory-has been known as such an image processing apparatus. Use of the digital camera enables a user to readily reserve image data or process the image data in any of various manners, through use of a personal computer or a like device. Further, a photograph can be printed without involving film development, so long as the image data are output to a printer. In association with recent improvement in the print quality of the printer, the printer can produce a high-quality print which is hard to distinguish from a silver photograph.

A limitation is imposed on the storage capacity of the recording medium of such a digital camera. For this reason, image data is compressed by means of, for example, the non-reversible compression technique, which conforms to the standards specified by Joint Photographic Coding Experts Group (JPEG).

The digital camera, which records image data by non-reversibly compressing the image data, encounters a fatal problem of deterioration in picture quality of the image data during compression of the image data. Although reversible compression or recording of non-compressed image data on a recording medium may be conceivable, the reversibly-compressed image data or the non-compressed image data are much greater in volume than the non-reversibly-compressed image data. Hence, the number of images capable of being recorded on a recording medium, such as a memory card having a given storage capacity, becomes significantly reduced. Further, it has also been well known that the greater the number of pixels of image data having high resolution, the greater the deterioration in picture quality of the image data at the time of non-reversible compression.

SUMMARY OF THE INVENTION

In view of the above described prior art, it is the object of the present invention to provide a digital camera and an image data processing method capable of reducing deterioration in picture quality of image data caused by compression of the image data, as well as capable of producing image data having a low data volume.

This object is achieved by the digital camera according to claim 1 and by the image processing method according to claim 5.

Advantageous embodiments are described in the dependent claims.

The inventor of the present invention has found the following relationship between the number of pixels of image data and the volume of image data after JPEG compression.

For example, the volume of image data which are obtained by photographing an object at 640 x 480 pixels and compressed according to JPEG is compared with the volume of image data which are obtained by photographing the same object at 1280 x 960 pixels and compressed in accordance with JPEG compression scheme. The latter image data have four times the number of pixels as the preceding image data (2x2=4). In contrast, if the image data comprising 1280x960 pixels have been compressed in accordance with JPEG compression scheme through use of a single quantization table, the resultant image data have about three times the volume as the original image data comprising 640x480 pixels. Therefore, it is ascertained that an increase in the number of pixels does not equal an increase in the volume of image data after compression in accordance with JPEG compression scheme. As a matter of course, the image data photographed at 1280x960 pixels are superior in picture quality to the image data compressed in accordance with the JPEG compression scheme.

The inventor has finally conceived that an image with fewer deterioration in picture quality may be obtained by interpolating pixels of original image data photographed at a certain number of pixels to thereby produce image data having a greater number of pixels, and compressing the image data in accordance with JPEG compression scheme, instead of by compressing the original image data, in their original form, in accordance with JPEG compression scheme.

The present invention has been conceived on the basis of the foregoing finding, and aims at providing a digital camera capable of preventing deterioration in picture quality of image data, which would otherwise be caused by compression, even when the data are subjected to non-reversible compression such as JPEG compression, as well as capable of controlling a reduction in the number of pictures that can be stored on a recording medium, which would otherwise be caused when image data are compressed after having been enlarged through interpolation, to within a practical range. The present invention also aims at providing a method of compressing digital image data while deterioration in picture quality of the data is reduced.

According to a first example which does not comprise all features necessary for the present invention, image data are interpolated, thereby producing enlarged image data which have a greater number of pixels than the original image data. The enlarged image data are subjected to non-reversible compression, thus producing compressed image data. The image data are compressed after having been enlarged by means of interpolation, and hence the volume of image data can be reduced while the deterioration in picture quality of image data, which is caused by compression, is reduced.

According to a second example which does not comprise all features necessary for the present invention, high-frequency components of the enlarged image data are eliminated through non-reversible compression, thus enabling compression of image data such that deterioration in picture quality of the image data becomes unnoticeable to the naked eyes. To this end, a compression scheme adhering to the standards defined by JPEG, for example, may be employed.

According to a third example which does not comprise all features necessary for the present invention, in order to make an image smooth at the time of interpolation of image data, enlarged image data can be produced by interpolation of the image data such that a resultant enlarged image is visible to the naked eyes. Accordingly, the profile or boundary area of an image can be prevented from being jagged, and jaggy noise can be made less noticeable.

Features and advantages of the invention will be evident from the following detailed description of the preferred embodiments described in conjunction with the attached drawings.

BRIEF DESCRIPTION OF THE DRAWINGS

In the accompanying drawings:

FIG. 1 is a flowchart showing procedures for recording image data by means of a digital camera according to one embodiment of the present invention;
FIG. 2 is a block diagram showing the digital camera according to the embodiment;
FIG. 3 is a schematic representation showing a filter provided on a CCD of the digital camera according to the embodiment;
FIG. 4 is a top view showing the top of the digital camera according to the present embodiment;
FIG. 5 is a rear view showing the digital camera according to the present embodiment;
FIG. 6 is a descriptive view for describing a smoothing operation effected in the digital camera according to the embodiment; and
FIG. 7 is descriptive view showing an image having a high spatial frequency and an image having a low spatial frequency.

DETAILED DESCRIPTION OF THE PREFERRED EMBODIMENTS

A preferred embodiment of the present invention will now be described in detail by reference to the accompanying drawings.

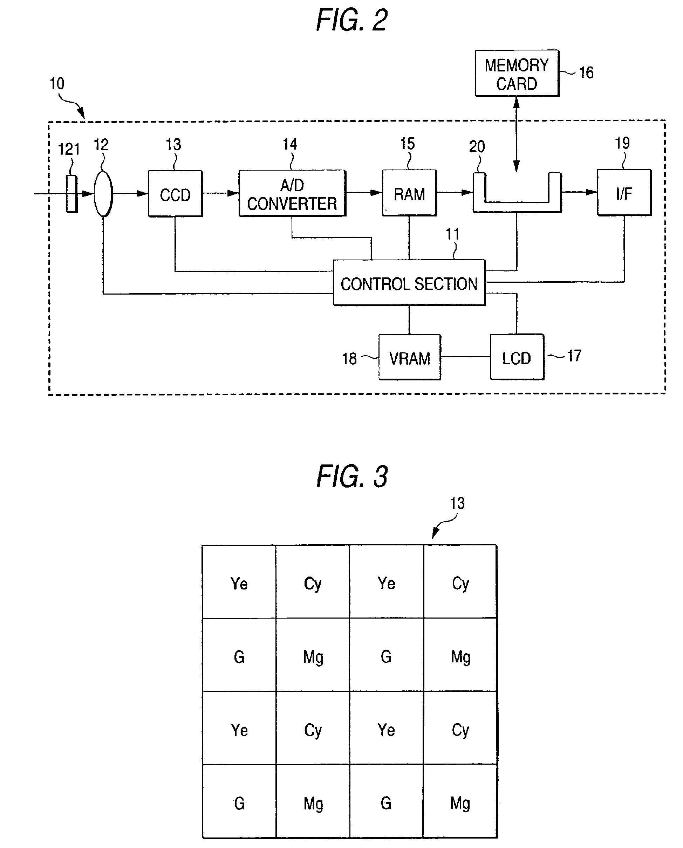

FIG. 2 is a block diagram for describing the structure of a digital camera 10 which records image data through use of an image data processing method according to one embodiment of the present invention. The digital camera 10 comprises a control section 11; a condensing lens 12; a charge-coupled device(CCD) 13 serving as image pickup means; an analog-to-digital converter (A/D converter) 14; random access memory (RAM) 15 for temporarily storing image data; flash memory 16 for recording image data; a liquid-crystal display device (LCD) 17 for indicating an image; video RAM (VRAM) 18 for reserving data pertaining to an image to be displayed on the LCD 17; and an interface 19 used for outputting the contents of the flash memory 16 to an external device.

The control section 11 comprises a CPU; ROM where a program used for controlling the digital camera 10 in various manners is recorded; and input/output means used for controlling other devices connected to the digital camera 10. The digital camera 10 may be controlled by means of a single control section 11 or by means of a plurality of control sections. The condensing lens 12 is equipped with a diaphragm 121 for controlling the amount of light entering the condensing lens 12. Square image pickup elements, each having at least any one of complementary color filers; Cy (cyan), Mg (magenta), Ye (yellow), and G (green), are arranged in a matrix pattern such as that shown in FIG. 3. A CCD having primary color filters; R (red), G (green), and B (blue), may be used.

The analog-to-digital conversion section 14, the control section 11, and the program recorded in the control section 11 serve as conversion means which converts a signal output from the CCD 13 into image data.

DRAM (dynamic RAM) having a self-refreshing function is employed as the RAM 15. The flash memory 16 is a rewritable recording medium--which can retain recorded contents without being energized-and is set in the digital camera 10. Alternatively, the flash memory 16 is removably attached to the digital camera 10. For example, a memory card conform to PCMCIA standards or a memory card capable of being attached to a PCMCIA card adapter can be used as the flash memory 16. The contents stored in the flash memory 16 can be directly read or written by means of a personal computer equipped with a PCMCIA card slot.

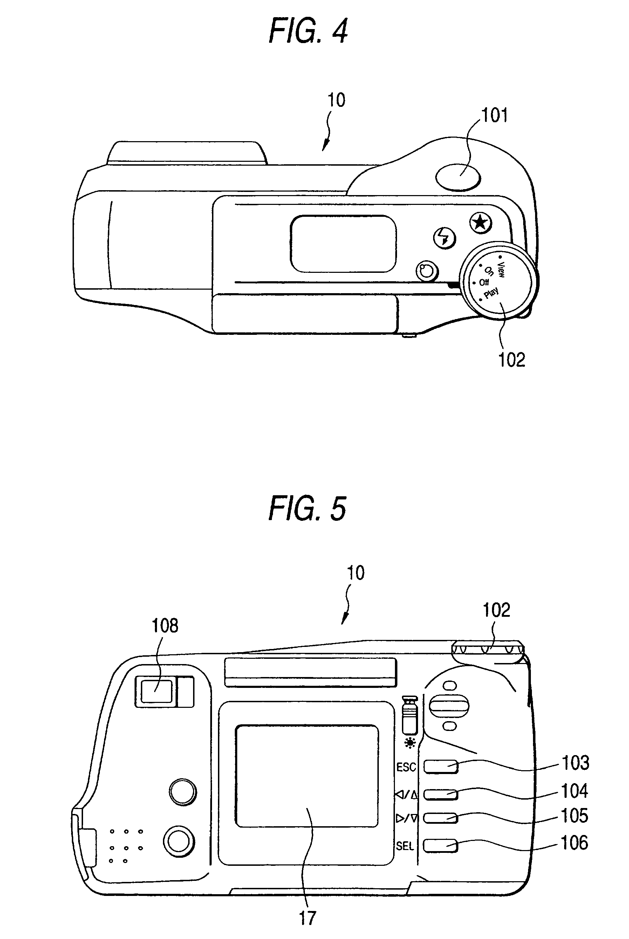

FIG. 4 is a top view showing the digital camera 10 according to the present embodiment, and FIG. 5 is a rear view showing the same. The user of the digital camera 10 performs shooting by pressing a shutter release button 101. The control section 11 can recognize a "half-released state" in which the shutter release button 101 is pressed to a predetermined intermediate position within the variable range of the shutter release button 101. Further, the control section 11 can recognize a "full-released state" in which the shutter release button 101 is pressed to the lower limit or the vicinity of the lower limit of the movable range of the shutter release button 101. The user can select any one of four modes; i.e., "VIEW," "ON," "OFF," and "PLAY, " by activation of a mode changeover dial 102 for changing the mode of the LCD 17. In the "VIEW" mode, the LCD 17 is used as a finder. In the "ON" mode, the LCD 17 is deactivated so as to conserve power dissipated by the digital camera 10, and the user performs photography while viewing the optical finder 108. In the "PLAY" mode, an image is displayed on the basis of the image data which have already been photographed and recorded in the flash memory 16. When the mode changeover dial 102 is switched to "OFF," the power of the 10 is shut off.

The operation of the digital camera 10 according to the present embodiment will now be described.

When the mode changeover switch 102 is switched to "PLAY, " an image is displayed on the LCD 17 on the basis of the image data stored in the flash memory 16. Actuation of a first arrow key 104 results in indication of a previous image, and actuation of a second arrow key 105 results in indication of the next image.

When the select key 106 is pressed, the digital camera 10 enters a menu display mode, wherein the user can perform various settings such as setting of a date or picture quality. An item to be set is selected by activation of the first and second arrow keys 104 and 105. The user can change the settings by pressing the select key 106 once again. The user can change conditions represented by, for example, numerals, by means of the first and second arrow keys 104 and 105. The user can return the current screen to a previous screen by activation of an ESC key 103.

When the mode changeover dial 102 is situated at "VIEW," the light converged at the CCD 13 by means of the condensing lens 12 is converted into an electric signal every fractions of a second to every several tenths of a second. The electrical signal is converted into digital image data and transferred to the VRAM 18, whereby an object of photography is displayed as a motion picture on the LCD 17.

Exposure for photography is changed by the control section 11 controlling the diaphragm 121 of the condensing lens 12 or shutter speed; i.e., the time required for the CCD 13 to store electric charges, on the basis of the data output from the CCD 13. The exposure automatically set by the control section 11 is taken as an automatic exposure setting. The shutter of the digital camera 10 may be implemented by use of a shutter for physically interrupting entry of light into the CCD 13 from the outside, an electronic shutter of the CCD 13, or a combination thereof.

When the user pushes the shutter release button 101 of the digital camera 10 to a "half-released" position, appropriate exposure and focus are set with regard to an image recognized by the CCD 13. While the shutter release button 101 is held in a half-released state, the thus-set exposure and focus settings are retained.

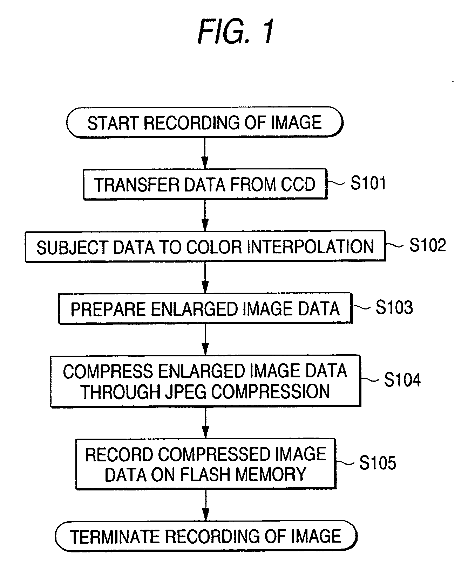

When the user pushes the shutter release button 101 to a fully-released position, recording of the image is commenced according to procedures such as those provided in FIG. 1, by means of the control section 11 executing a computer program.

In step S101, the electric charges accumulated in the CCD 13 is fully released, and the light converged by the condensing lens 12 is input to the CCD 13. The CCD 13 converts the light into electric charge according to the luminous energy of the light. The electric signal output from the CCD 13 is converted into a digital signal by means of the analog-to-digital converter 14. Digital data output from the analog-to-digital converter 14 are transferred while the address of the RAM 15 is directly specified by bypassing the control section 11, by means of DMA (direct memory access) for increasing a transfer speed.

The image data transferred from the CCD 13 represent the luminous intensity of the light that has passed through the filter shown in FIG. 3. One pixel provides data corresponding to a single color. In step S102, the data stored in the RAM 15 are subjected to the following color interpolation, to thereby produce, for example, image data having 1280x960 pixels.

In the present embodiment, image data are recorded while being compressed in the JPEG format. To this end, a luminous component Y required for generating data of JPEG format are obtained in accordance with the following approximate expression:

$$Y = \{G + Mg + Ye + Cy\} \times 1/4 = 1/4\{2B + 3G + 2R\}$$

Further, chromatic components (color-difference components) are computed through use of color data pertaining to pixels surrounding the pixel of interest in accordance with the following approximate expressions:

$$R - Y = \{(Mg + Ye) - (G + Cy)\} = \{2R - G\}$$

$$B - Y = \{(Mg + Cy) - (G + Ye)\} = \{2B - G\}$$

The luminous component signal Y is computed from 1280x960 pixels, and the chromatic component signals U and V are computed from 640x960 pixels, wherein every second horizontal pixel is counted. This computation method is called a 4:2:2 JPEG compression scheme. Color component data are partially subjected to arithmetic mean processing and compressed. Through the foregoing processing, there are computed Y data pertaining to 1280x960 pixels, U data pertaining to 640x960 pixels, and V data pertaining to 640x960 pixels.

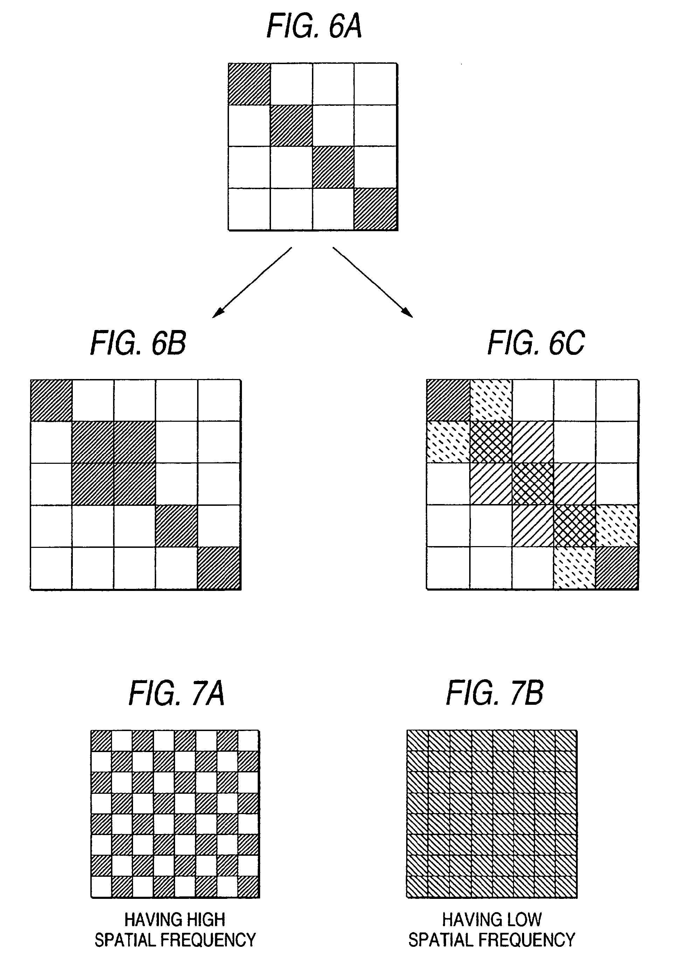

In step S103, enlarged image data pertaining to 1600x1200 pixels are prepared from the image data pertaining to 1280x960 pixels prepared in step S102, by means of an enlargement technique such as cubic convolution interpolation. Preferably, as described in, e.g., Japanese Patent Application No. Hei-10-290858, the interpolation enlargement processing involves a smoothing operation. For instance, when an image comprising 4x4 pixels as shown in (A) in FIG. 6 is enlarged to an image comprising 5x5 pixels, as shown in (B) in FIG. 6, the image may assume an unnatural appearance when enlarged on the basis of a simple proportion of the number of pixels. In contrast, in the present embodiment, as shown in (C) in FIG. 6 the original image can be enlarged to assume a natural appearance. In the area of the profile of the image, the direction of the profile is detected, and the image can be enlarged by anticipating the direction of the profile and changing weighting factors used for computation on the basis of the pixels surrounding the pixel of interest. Consequently, the image can be enlarged while the stair steps of the profile are made less noticeable and the profile of the image is enhanced.

In step S104, in order to increase the number of pictures to be recorded on the flash memory 16, the image data are compressed in accordance with the JPEG compression scheme, thus producing compressed image data of small volume. JPEG is a scheme commonly used for compressing a color image. The picture quality of a stored image can be controlled by changing the compression ratio. JPEG compression is effected by means of software in the control section 11 and through use of a dedicated circuit, in order to increase the processing speed.

JPEG compression scheme is based on the following principle. In accordance with JPEG compression scheme, the Y, U, and V data pertaining to an image are divided into blocks, each block comprising 8x8 pixels. In the case of an image comprising 1280x960 pixels, data pertaining to the image are divided into 160x120 blocks. In the case of an image comprising 1600x1200 pixels, data pertaining to the image are divided into 200x150 blocks. When the original image is compared with blocks of the thus-enlarged image, the enlarged image corresponds to fragmentation of the original image into smaller blocks.

In accordance with the JPEG compression scheme, compression of an image is effected on a per-block basis. The relative relationship of density (spatial frequency) between adjacent pixels is examined within each block, and the image data are divided into a low-frequency term and a high-frequency term in accordance with discrete cosine transform (DCT). For instance, an image having a checkerboard pattern as shown in FIG. 7A has a high spatial frequency, whereas an image having a single gradation as shown in FIG. 7B has a low spatial frequency. The high frequency term is removed by quantization of the image through use of a predetermined quantization table. Finally, the quantized data are subjected to Huffman encoding, whereby the image data are compressed. Huffman encoding satisfies the reversible characteristics of data, and data are not damaged before or after Huffman encoding. The volume of data can be reduced to about one-half through compression based on Huffman encoding. The compression ratio can be changed by changing the rate at which the high-frequency term is removed by means of discrete cosine transform and quantization.

In a case where more complex data (i.e., a high frequency component) is included in a block of 8x8 pixels, if the block is quantized, a larger deficiency may arise in the block. An image photographed by the digital camera 10 usually includes a large high frequency component. However, when consideration is given to a very small area of the image (block), the block is essentially free of a high-frequency component. The block becomes more analogous to a plane having uniform brightness and color. If such an image is subjected to discrete cosine transform, centralization of data is enhanced, and the data become more resistant to quantization. Accordingly, the compression ratio at which image data are compressed through Huffman encoding is increased.

In the present embodiment, in a case of an image comprising 1280x960 pixels before enlargement, the image is divided into 160x120 blocks. In contrast, if the enlarged image comprises 1600x1200 pixels, the image is divided into 200x150 blocks. Consequently, each of the blocks after enlargement of the image becomes less complex, and the effect of compression is further improved.

The volume of the image data after the image has been compressed is provided below. For instance, if image data comprising 1280x960 pixels are subjected to JPEG compression through use of a predetermined quantization table, the image data are compressed to 400 KB. When the same image data are compressed after having been enlarged by means of the foregoing enlarging processing, the data are compressed to 500 KB.

When the image comprising 1280x960 pixels is simply enlarged to an image comprising 1600x1200 pixels, the volume of data is increased by 50 percent or more, according to the proportions of the number of pixels. Therefore, the volume of image data is usually expected to be about 680 KB after JPEG compression. However, according to the JPEG compression effected in the present embodiment, the compression rate at which the image data are compressed by means of Huffman encoding is greatly improved by means of concentration of data within blocks resulting from enlargement of an image. Therefore, the rate at which the amount of data is increased is lower than the rate at which the number of pixels is increased.

In step S104, the image data compressed in accordance with JPEG compression scheme are recorded in the flash memory 16 in step S105. Particularly, when the compression rate is increased, the picture quality of the image based on the compressed image data is deteriorated by noticeable blocks of 8x8 pixels; i.e., so-called block noise. In contrast, according to the present embodiment, the enlarged data are compressed according to the JPEG compression scheme, and the size of the block per unit area becomes smaller, thus preventing deterioration in picture quality of the image.

There is a case where several to several tends of seconds may lapse from the time recording of image data into the flash memory 16 is commenced to the time when the recording is completed. During that period of time, an image based on the image data is continuously displayed on the LCD 17.

When the mode changeover switch is switched to "ON," the LCD 17 is not energized, and the LCD 17 remains inactive at all times. Power is usually not applied to the CCD 13. When the user presses the shutter release button 101 to a "half-released" position, the CCD 13 is activated. In respect to other operations, the "ON" mode is identical with "VIEW" mode.

In the digital camera 10 according to the present embodiment, the data pertaining to image data acquired from the CCD 13 are compressed in accordance with the JPEG compression scheme after having been enlarged. An improvement in the compression rate is greater than an increase in the volume of data associated with enlargement of the image, and hence an increase in the volume of image data becomes smaller than the increase in the volume of data associated with enlargement of the image, thereby efficiently reserving high-definition image. Further, an image is enlarged through use of image data which have not yet been subjected to JPEG compression area. In contrast with a case where an image is enlarged by utilization of the image data which have been subjected to JPEG compression, an enlarged image having superior picture quality can be produced.

In general, when an image photographed by a digital camera is output to a printer, the image is enlarged. Therefore, enlargement of an image within the camera is convenient for producing a high-quality picture. Further, in a case where the volume of the image data compressed through JPEG compression is set to a single size, an image can be prevented from being damaged, by converting the image data into the data based on a smaller quantization table.

In the present embodiment, the image comprising 1280x960 pixels is enlarged to a scale of 1.25, to an image comprising 1600x1200 pixels. However, as a matter of course, the scale of magnification can be changed to a scale of 1.5, 2, or other values.

Although in the present embodiment the CCD 13 comprising square image pickup elements is used for the digital camera, a CCD comprising rectangular image pickup elements may be used for the digital camera.

Although the present embodiment has described a digital (still) camera which photographs still images, the present invention may be applied to a digital video camera which records motion pictures by compression of images according to the MPEG (motion picture experts group) compression scheme. Further, the digital camera may also be configured such that the user can select the compression of image data after enlargement according to the JPEG compression scheme described in connection with the present embodiment and compression of image data without involvement of enlargement according to the JPEG compression scheme, which has conventionally been practiced.

Although in the present embodiment the image data processing method according to the present invention is applied to a digital camera which records data on a recording medium, the present invention may be applied to a digital camera which transfers image data to another device by means of a communications line, as well as to other image processing apparatus.

Further, although the invention has been described in its preferred form with a certain degree of particularity, it is understood that the present disclosure of the preferred form is not limiting the scope of the invention. The scope of the invention is defined by the appended claims.

**Claims**

1.   A digital camera (10), comprising:

image pickup means (S101; 121, 12, 13) for converting light reflected from an object of photography into an electric signal;
conversion means (S101; 14) for converting a signal output from all of the pixels of said image pickup means into 2D image data with a predetermined number of pixels in two dimensions (1280 x 960);
interpolation means (S103; 15) for interpolating the image data in both dimensions to prepare enlarged image data whose number of pixels in each of the two dimensions are greater (1600 x 1200) in number than those of image data;
compression means (S104, 18) for preparing compressed image data by subjecting the enlarged image data to non-reversible compression;
recording means (S105; 16) for recording the thus-compressed image data; and
a control section (11) for controlling said image pickup means, said conversion means, said interpolation means, said compression means, and said recording means.

2.   The digital camera according to claim 1, wherein the non-reversible compression corresponds to removal of a high-frequency component of the enlarged image data.

3.   The digital camera according to claim 1, wherein said interpolation means performs a smoothing operation.

4.   The digital camera according to claim 2, wherein said interpolation means performs a smoothing operation.

5.   An image data processing method by a digital camera having image pickup means for converting light reflected from an object of photography into an electric signal,
converting a signal output from all of the pixels of said image pickup means into 2D image data with a predetermined number of pixels in two dimensions (1280 x 960);
interpolating the image data in both dimensions to prepare enlarged image data whose number of pixels in each of the two dimensions are greater (1600 x 1200) in number than those of the image data; and
subjecting the enlarged image data to non-reversible compression to thereby prepare compressed image data; and
recording the compressed image data.

6.   The image data processing method according to claim 5, wherein the non-reversible compression corresponds to removal of a high-frequency component from the enlarged image data.

7.   The image data processing method according to claim 5, wherein said interpolating step includes a smoothing operation.

**8.** The image data processing method according to claim 6, wherein said interpolating step includes a smoothing operation.

**9.** The image data processing method according to claim 5, wherein the image data is enlarged to a scale of 1.25 or larger.

**10.** The digital camera (Fig. 6c) according to claim 1, wherein said interpolation means is adapted for interpolating the image data in both dimensions by

detecting, in the area of the profile of the image represented by the image data, the direction of the profile of the image;
anticipating the direction of the profile; and
changing weighting factors used for the computation on the basis of the pixels surrounding the pixel of interest.

**11.** The digital camera according to claim 1, comprising a color interpolation means (S102) for subjecting the image data to a color interpolation before said enlargement interpolation.

**12.** The digital camera according to claim 11, wherein said color interpolation generates a 4:2:2 image representation.

**Patentansprüche**

**1.** Eine Digitalkamera (10), **gekennzeichnet durch**:

eine Bildaufnahmeeinrichtung (S101; 121, 12, 13), um von einem fotografischen Objekt reflektiertes Licht in ein elektrisches Signal umzuwandeln;
eine Umwandlungseinrichtung (S101; 14), um die Signalausgabe aller Bildpunkte der Bildaufnahmeeinrichtung in 2D-Bilddaten mit einer vorbestimmten Anzahl von Bildpunkten in zwei Dimensionen (1280 X 960) umzuwandeln;
eine Interpolationseinrichtung (S103; 15), um die Bilddaten in beiden Dimensionen zu interpolieren, um vergrößerte Bilddaten zu erstellen, deren Bildpunktanzahl (1600 X 1200) jeder der beiden Dimensionen größer als die Bildpunktanzahl der Bilddaten ist;
eine Komprimierungseinrichtung (S104, 18), um komprimierte Bilddaten zu erstellen, indem die vergrößerten Bilddaten einer nicht-reversiblen Komprimierung unterzogen werden;
eine Aufzeichnungseinrichtung (S105; 16), um die so komprimierten Bilddaten aufzuzeichnen;
einen Steuerungsabschnitt (11), um die Bildaufnahmeeinrichtung, die Umwandlungseinrichtung, die Interpolationseinrichtung, die Komprimierungseinrichtung und die Aufzeichnungseinrichtung zu steuern.

**2.** Eine Digitalkamera gemäß Anspruch 1, in der die nicht-reversible Komprimierung einem Entfernen einer Hochfrequenzkomponente der vergrößerten Bilddaten entspricht.

**3.** Eine Digitalkamera gemäß Anspruch 1, in der die Interpolationseinrichtung eine Glättungsoperation durchführt.

**4.** Eine Digitalkamera gemäß Anspruch 2, in der die Interpolationseinrichtung eine Glättungsoperation durchführt.

**5.** Ein Verfahren zum Verarbeiten von Bilddaten für eine Digitalkamera mit einer Aufnahmeeinrichtung zum Umwandeln von von einem photographischen Objekt reflektiertem Licht in ein elektrisches Signal,
Umwandeln der Signalausgabe aller Bildpunkte der Bildaufnahmeeinrichtung in 2D-Bildaten mit einer vorbestimmten Bildpunktanzahl (1280 x 960);
Interpolieren der Bilddaten in beiden Dimensionen, um vergrößerte Bilddaten zu erzeugen, deren Bildpunktanzahl in jeder der beiden Dimensionen größer (1600 X 1200) als die Bildpunktanzahl der Bilddaten ist; und
Unterziehen der vergrößerten Bilddaten einer nicht-reversiblen Komprimierung, um dadurch komprimierte Bilddaten zu erzeugen; und
Aufzeichnen der komprimierten Bilddaten.

**6.** Ein Verfahren zum Verarbeiten der Bilddaten gemäß Anspruch 5, wobei die nicht-reversible Komprimierung der Bilddaten einem Entfernen einer Hochfrequenzkomponente der vergrößerten Daten entspricht.

**7.** Ein Verfahren zum Verarbeiten der Bilddaten gemäß Anspruch 5, wobei der Interpolationsschritt eine Glättungsoperation beinhaltet.

**8.** Ein Verfahren zum Verarbeiten der Bilddaten gemäß Anspruch 6, wobei der Interpolationsschritt eine Glättungsoperation beinhaltet.

**9.** Ein Verfahren zum Verarbeiten der Bilddaten gemäß Anspruch 5, wobei die Bilddaten um den Maßstab 1.25 oder größer vergrößert werden.

**10.** Eine Digitalkamera (Fig. 6c) gemäß Anspruch 1, wobei die Interpolationseinrichtung angepasst ist, die Bilddaten in beiden Dimensionen zu interpolieren, durch
Feststellen der Richtung des Bildprofils im Bereich des Bildprofils, das durch die Bilddaten repräsentiert ist,
Bestimmen der Richtung des Profils; und
Ändern von Gewichtungsfaktoren, die für die Berechnung verwendet werden, auf der Grundlage der den interessierenden Bildpunkt umgebenden Bildpunkte.

**11.** Eine Digitalkamera gemäß Anspruch 1, die eine Interpolationsvorrichtung (S102) beinhaltet, um die Bilddaten vor der Vergrößerungs-Interpolation einer Farbinterpolation zu unterziehen.

**12.** Eine Digitalkamera gemäß Anspruch 11, in der die Farbinterpolation eine 4:2:2 Bilddarstellung erzeugt.

**Revendications**

**1.** Caméra numérique (10), comportant :

des moyens de prélèvement d'image (S101 ; 121, 12, 13) pour convertir une lumière réfléchie depuis une photographie en un signal électrique ;
des moyens de conversion (S101 ; 14) pour convertir un signal provenant de tous les pixels desdits moyens de prélèvement d'image en données d'image 2D avec un nombre prédéterminé de pixels en deux dimensions (1280 x 960) ;
des moyens d'interpolation (S103 ; 15) pour interpoler les données d'image dans les deux dimensions afin de préparer des données d'image agrandies dont le nombre de pixels dans chacune des deux dimensions est supérieur (1600 x 1200) en nombre à ceux des données d'images ;
des moyens de compression (S104 ; 18) pour préparer des données d'image compressées en soumettant les données d'image agrandies à une compression non réversible ;
des moyens d'enregistrement (S105 ; 16) pour enregistrer les données d'image ainsi compressées ; et
une section de contrôle (11) pour contrôler lesdits moyens de prélèvement d'image, lesdits moyens de conversion, lesdits moyens d'interpolation, lesdits moyens de compression, et lesdits moyens d'enregistrement.

**2.** Caméra numérique selon la revendication 1, dans laquelle la compression non réversible correspond à l'élimination d'un composant haute fréquence des données d'image agrandies.

**3.** Caméra numérique selon la revendication 1, dans laquelle lesdits moyens d'interpolation effectuent une opération de lissage.

**4.** Caméra numérique selon la revendication 2, dans laquelle lesdits moyens d'interpolation effectuent une opération de lissage.

**5.** Procédé de traitement de données d'image par une caméra numérique possédant des moyens de prélèvement d'image pour convertir une lumière réfléchie depuis une photographie en un signal électrique,
convertir un signal provenant de tous les pixels desdits moyens de prélèvement d'image en données d'images 2D avec un nombre prédéterminé de pixels en deux dimensions (1280 x 960) ;
interpoler les données d'image dans les deux dimensions afin de préparer des données d'image agrandies dont le nombre de pixels dans chacune des deux dimensions est plus grand (1600 x 1200) en nombre que ceux des données d'image ; et
soumettre les données d'image agrandies à une compression non réversible pour ainsi préparer des données d'image compressée ; et
enregistrer les données d'image compressées.

**6.** Procédé de traitement de données d'image selon la revendication 5, dans lequel la compression non réversible correspond à l'élimination d'un composant haute fréquence des données d'image agrandies.

7. Procédé de traitement de données d'image selon la revendication 5, dans lequel ladite étape d'interpolation comprend une opération de lissage.

8. Procédé de traitement de données d'image selon la revendication 6, dans lequel ladite étape d'interpolation comprend une opération de lissage.

9. Procédé de traitement de données d'image selon la revendication 5, dans lequel les données d'image sont agrandies à une échelle de 1,25 ou plus.

10. Caméra numérique (Figure 6c) selon la revendication 1, dans laquelle lesdits moyens d'interpolation sont adaptés pour interpoler les données d'image dans les deux dimensions en
détectant, dans la zone du profil de l'image représentée par les données d'image, la direction du profil de l'image ;
anticipant la direction du profil ; et
changeant les coefficients de pondération utilisés pour le calcul en fonction des pixels entourant le pixel intéressé.

11. Caméra numérique selon la revendication 1, comportant des moyens d'interpolation couleur (S102) pour soumettre les données d'image à une interpolation couleur avant ladite interpolation d'agrandissement.

12. Caméra numérique selon la revendication 11, dans laquelle ladite interpolation couleur génère une représentation d'image 4:2:2.

## FIG. 1

```
┌──────────────────────────────────┐
│     START RECORDING OF IMAGE     │
└──────────────────────────────────┘
                 │
                 ▼
┌──────────────────────────────┐
│   TRANSFER DATA FROM CCD      │── S101
└──────────────────────────────┘
                 │
                 ▼
┌──────────────────────────────────────┐
│ SUBJECT DATA TO COLOR INTERPOLATION   │── S102
└──────────────────────────────────────┘
                 │
                 ▼
┌──────────────────────────────────┐
│   PREPARE ENLARGED IMAGE DATA     │── S103
└──────────────────────────────────┘
                 │
                 ▼
┌──────────────────────────────────┐
│  COMPRESS ENLARGED IMAGE DATA     │── S104
│  THROUGH JPEG COMPRESSION         │
└──────────────────────────────────┘
                 │
                 ▼
┌──────────────────────────────┐
│   RECORD COMPRESSED IMAGE     │── S105
│   DATA ON FLASH MEMORY        │
└──────────────────────────────┘
                 │
                 ▼
┌──────────────────────────────────┐
│   TERMINATE RECORDING OF IMAGE   │
└──────────────────────────────────┘
```

## FIG. 2

## FIG. 3

| | | | |
|------|------|------|------|
| Ye | Cy | Ye | Cy |
| G | Mg | G | Mg |
| Ye | Cy | Ye | Cy |
| G | Mg | G | Mg |

# FIG. 4

# FIG. 5

EP 0 998 130 B1

## FIG. 6A

## FIG. 6B

## FIG. 6C

## FIG. 7A

HAVING HIGH
SPATIAL FREQUENCY

## FIG. 7B

HAVING LOW
SPATIAL FREQUENCY

14